# EUROPEAN PATENT SPECIFICATION

(11) **EP 4 051 981 B1**
(45) Date of publication and mention of the grant of the patent: **08.11.2023**
(21) Application number: 20815920.2
(22) Date of filing: 30.10.2020
(51) Int. Cl.: G01B 11/24

(54) **DEVICE FOR DETECTING THE CODING PROFILE OF A KEY**
VORRICHTUNG ZUR ERKENNUNG DES CODIERUNGSPROFILS EINES SCHLÜSSELS
DISPOSITIF DE DÉTECTION DU PROFIL DE CODAGE D'UNE CLÉ

(30) Priority: 31.10.2019 IT 201900020188
(43) Date of publication of application: 07.09.2022
(73) Proprietor: SILCA S.p.A., 31029 Vittorio Veneto (TV) (IT)
(72) Inventor: NIGRO, Gennaro Giovanni, 31010 Mareno di Piave (TV) (IT); UGEL, Maurizio, 33084 Cordenons (PN) (IT); PIGATTI, Giorgio, 31016 Cordignano (TV) (IT); DA RODDA, Oreste, 31020 Revine Lago (TV) (IT); TONELLO, Fabrizio, 33074 Fontanafredda (PN) (IT); TONON, Alvise, 32016 Alpago (BL) (IT); MARCHESIN, Flavio, 31015 Conegliano (TV) (IT); SALVADOR, Carlo, 31029 Vittorio Veneto (TV) (IT)
(74) Representative: Braidotti, Andrea
(86) International application number: PCT/IB2020/060199
(87) International publication number: WO 2021/084490

(56) References cited:
- EP-A1- 2 102 586
- WO-A1-2017/056054
- US-A- 6 064 747

## Description

The present invention relates to a device for detecting the coding profile of a key, as well as a duplicating machine comprising this device.

Mechanical key cutting machines are known, which provide for the presence of a feeler which is made to slide on the profile of the original key to be duplicated, locked in a first clamp, and of a cutter, integral with the feeler, and acting on the blank key. to be coded, locked in a second terminal, fixed with respect to the first.

Electronic duplicating machines are also known which use, instead of the feeler, an optical reader of the key coding; in particular, the optical reader comprises a light source facing the original key and a sensor which collects the rays emitted by said source and passing through the coded portion of the key. These machines also require the presence of two clamps, one for the blank key to be coded, facing the cutter, and one for the original key to be duplicated, facing the optical reader. The two clamps are integral with each other and are movable with respect to the optical reader and the cutter, which are fixed with respect to the base of the machine.

A drawback of these known electronic duplicating machines is their rather bulky dimensions; furthermore the duplication result can be influenced by the different machining errors, inevitably existing between the two clamps, as well as by the positioning errors of the two keys on them. Last but not least, the fact that it is necessary to carry out a preliminary and laborious alignment operation of the two clamps so that the original key and the blank key, clamped by them, are both arranged with the axes of the stems strictly parallel to each other.

WO99/06179 describes an electronic key cutting machine in which the key is held, at the head, by means of suitable tabs. The optical reader and the cutter are mounted on a rotating disk-shaped support which is suitably rotated in such a way as to make the optical reader or the cutter face the key at different times.

WO2015010936 describes an electronic key cutting machine which is provided with a single clamp intended to clamp between its jaws, at different moments, an original key to be duplicated and a blank key to be encrypted. An optical reader is also provided to detect the coding of the original key to be duplicated and a cutter to carry out the same coding on the blank key; in particular, both the optical reader and the cutter are mounted on a support which is integral with the base of the machine and is shaped like a "C" with the opening facing the clamp. More in detail, while the optical reader is mounted on the two horizontal sections of the C-shaped support, the cutter is mounted in correspondence with the cavity delimited by said horizontal sections.

Also known are devices for detecting the coding profile of a key equipped with at least one optical reader configured to detect at least a portion of the key, in particular described in documents US 6064747 A, EP 2102586 A1 and WO 2017/056054 A1. However, these devices are configured to detect the morphology of the key's cross section (i.e. the transverse profile of the key with respect to its main development axis), making it unsuitable for detecting the coding profile that develops along the longitudinal development of the key itself.

Conveniently, the known solutions which provide for the use of a single terminal are equipped with a unit for storing the coding of the key to be duplicated detected by the optical reader.

However, even the known solutions which provide for the use of a single clamp - which is intended to clamp between its jaws, at different times, an original key to be duplicated and a blank key to be coded - have particularly bulky dimensions, in particular in the case of use of a telecentric lens. Furthermore, the precise positioning of the key on the clamp is rather laborious and complicated.

The object of the invention is to propose a device for detecting the coding profile of a key which is convenient, easy and quick to use for the user, in particular during the key positioning step.

Another object of the invention is to propose a device which allows a precise, fast, reliable and highly repeatable reading of the coding profile of a key.

Another object of the invention is to propose an electronic duplicating machine which also allows the reading and acquisition of the coding profile of a key.

Another object of the invention is to propose a device which can also be used in duplicating machines already available on the market.

Another object of the invention is to propose an electronic duplicating machine which has particularly small dimensions.

Another object of the invention is to propose an electronic duplicating machine which can be obtained simply, quickly and with low costs.

Another object of the invention is to propose an electronic duplicating machine which ensures adequate protection of the optical components, which are particularly delicate.

Another object of the invention is to propose a device and a duplicating machine which are improvements and/or alternatives with respect to traditional solutions.

Another purpose of the invention is to propose an electronic key cutting machine that makes the entire duplication operation particularly efficient, an operation which includes both the step of detecting the coding profile from the original key and the step of cutting the blank key in order to reproduce the previously detected coding profile.

All these purposes, both individually and in any combination thereof, and others that will emerge from the following description, are achieved, according to the invention, with a device having the characteristics indicated in claim 1.

The present invention is further clarified hereinafter in a preferred embodiment thereof, reported for purely illustrative and non-limiting purposes with reference to the attached drawing tables, in which:
- Figure 1: is a perspective view of an electronic duplicating machine of keys according to the invention with the drawer of the device for detecting the coding of a key, in the extracted/open condition,
- Figure 2: shows an enlarged detail of fig. 1 with the key clamped inside the drawer,
- Figure 3: shows in perspective view the duplicating machine of fig. 1 with the drawer of the device for detecting the coding of a key, in the closed condition,
- Figure 4: shows an enlarged detail of fig. 3,
- Figure 5: shows a perspective view of the machine of fig. 1 according to a vertical section that crosses it in correspondence with the device for detecting the coding of a key,
- Figure 6: shows in perspective view an enlarged detail of the drawer, in the extracted/open condition, of the device for detecting the coding of a key,
- Figure 7: shows in a vertical section the device for detecting the coding of a key in a condition in which the drawer is extracted/open and with the key clamped/held inside said drawer, and
- Figure 8: shows, according to the same view of fig. 7, the device for detecting the coding of a key in a condition in which the drawer is closed.

As can be seen from the figures, according to the invention, the electronic key cutting machine 1 comprises a support structure 10 and also comprises:
- a front operative area 2 which is accessible by the operator and which, preferably, is removably covered and separated, at least partially, from the external environment 3 by means of a covering and/or protection cranckcase 4 movable with respect to said support structure 10,
- a rear containment area 5 which, preferably, is covered and separated from the external environment by a casing 6 which is fixed (i.e. not movable with respect to) said support structure 10.

Conveniently, the duplicating machine 1 is of the professional or semi-professional type, that is, it is of the type generally present and used in key duplication centers.

Conveniently, the support structure 10 comprises at the bottom a support base 7 and also a dividing element 8, preferably defined by a substantially vertical dividing wall, which is mounted on said support base 7. In particular, the aforementioned two areas 2, 5 are defined above the support base 7 and are separated from each other by said dividing element 8.

Preferably, the cranckcase 4 is associated with the support structure 7 so that it can be rotated with respect to the latter; while the casing 6 is stably associated with the support structure 10 by means of suitable mechanical fastening means, for example by interlocking engagement means and/or traditional fastening members (screws, rivets, bolts, etc.).

Conveniently, at least one cutter 11, or other cutting member, of at least one milling and/or cutting unit (for flat keys and/or laser keys) and at least one clamp 12 for holding a key blank to be machined. Advantageously, carriages 15, 17 are also housed in the front operative area 2 on which said at least one clamp 12 is mounted, to thus allow movement with respect to the cutter 11 of the key held by the corresponding clamp 12.

Preferably, a first carriage 15 is provided which is motorized so as to allow the movements of said first carriage in both directions along a first horizontal axis Y of the machine 1. Preferably, a second carriage 17 is mounted on the first carriage 15, which is also motorized so as to allow movement of the latter with respect to the first carriage 15 in both directions along the horizontal axis X (which is perpendicular to the Y axis) of the machine 1.

Conveniently, the clamp 12 is mounted on the second carriage 17 which includes a support and two superimposed jaws and is mounted on a pin fixed to said support. Conveniently, the jaws have a square plan and the facing surfaces are differently shaped so as to be able to hold together keys with different profiles.

Advantageously, a knob 18 is associated with the upper portion of the pin of the clamp 12 and has the function of controlling the approach and removal of the two jaws and their locking to the support.

Conveniently, the carriages 15, 17 are driven and made to move forward with respect to the cutter 11 inside the front operating area 2 so as to obtain in sequence the corresponding coding slots on the stem of a blank key.

Conveniently, the rear containment area 5 is configured to house the components of the machine 1 for which direct access by the operator is not required during normal operation of the machine itself. In particular, the rear containment area 5 houses the motor (not shown) for driving the cutter 11 of the milling unit and the mechanical transmission members (not shown) to connect the motor output to the cutter holder shaft; preferably, said cutter holder shaft is partially housed in the rear containment area 5 and protrudes into the front operative area 2.

Conveniently, the motors (not shown), preferably of the stepper type, are also housed in the rear containment area 5, for moving the first carriage 15 and the second carriage 17.

Conveniently, the machine 1 also comprises a control and management unit 19.

Advantageously, the control and management unit 19 of the entire machine 1 is housed inside the rear containment area 5. Conveniently, said control and management unit 19 comprises an electronic board configured and programmed for the control and command of the various components of the machine 1.

Preferably, said unit 19 is electrically connected with the motors of the machine 1 and with a plurality of sensors installed on the machine itself in order to manage and monitor its operation.

Preferably, said unit 19 also comprises storage means.

Advantageously, said unit 19 can be connected to an external electronic device by means of one or more data communication interfaces 13 (for example, traditional ports for cables or connectors), or via wireless connections, to thus allow the machine 1 to exchange (in reception and/or transmission) data, commands or information with the outside world.

Conveniently, the machine 1 according to the invention comprises a device 20 for detecting the coding of a key 21 which, advantageously, is housed - preferably entirely - inside the support base 7 of the key cutting machine 1, outside the operating area front 2.

In particular, the device 20 comprises an optical reader 22 which is entirely housed inside the support base 7 of the duplicating machine 1, outside the front operating area 2. This is particularly advantageous since it allows to protect the more delicate components of the optical reader 22.

The optical reader 22 comprises a telecentric lens 23. Preferably, said telecentric lens 23 comprises a bi-telecentric lens.

Conveniently, the entrance lens 29 of the optic 23 has a diameter equal to or greater than the field of view and, in particular, has a diameter greater than at least the coded portion of the key 21 whose coding is to be detected.

The optical reader 22 comprises at least one optical (or image) sensor 31 which, preferably, can be of the CCD or CMOS type. Conveniently, the optical sensor 31 comprises a matrix of photosensitive cells. In particular, the telecentric optics 23 conveys the light rays of the framed scene towards said at least one optical sensor 31.

Advantageously, said optical reader 22 can comprise a camera in which said sensor 31 is incorporated.

Conveniently, the optical reader 22 also comprises means for the analog/digital conversion (A/D) of the electrical signals representative of the image detected by the optical sensor 31. In particular, the A/D conversion can be carried out outside the sensor (for example in the case of a CCD sensor), or it can be performed inside the sensor (for example in the case of a CMOS sensor).

Conveniently, the optical reader 22 comprises a communication/data transmission channel for transferring at least one digital signal, which is representative of at least one image detected by the optical sensor 31, to a processing unit.

Advantageously, said processing unit comprises a processor configured to process said at least one image that has been received, preferably according to known digital image processing algorithms.

Preferably, said processor of the image processing unit can correspond to the processor defining the control and management unit 19 of the entire machine. Alternatively, the processor of the processing unit of the device 20 (and connected to the optical reader 22) can be implemented in an electronic board separate from that of the processor of the control and management unit 19 of the duplicating machine 1, even though the two processors are suitably connected to each other.

The device 20 also comprises, in a position facing and aligned with the telecentric optic 23 and the sensor 31, a movable/removable drawer 24. Conveniently, the telecentric optic 23 is interposed between the optical sensor 31 and the removable drawer 24 inside the key 21 of which the coding profile is to be detected is intended to be clamped.

Conveniently, the area framed by the optical reader 22 is defined inside the drawer 24.

In particular, the drawer 24 is movable towards and away from the telecentric optic 23, along a direction substantially corresponding to and/or parallel to the optical axis of the reader 22.

Conveniently, the telecentric optics 23, the sensor 31 and the framed area - which is defined inside the drawer 24 and in which the stem of the key whose coding is to be detected is intended to be positioned - are aligned along the same optical axis of said reader 22.

Conveniently, the drawer 24 is mounted on the base 7 of the machine 1 and is movable with respect to said base. Preferably, for this purpose, guides 25 are provided on said base 7 for the sliding of said drawer 24.

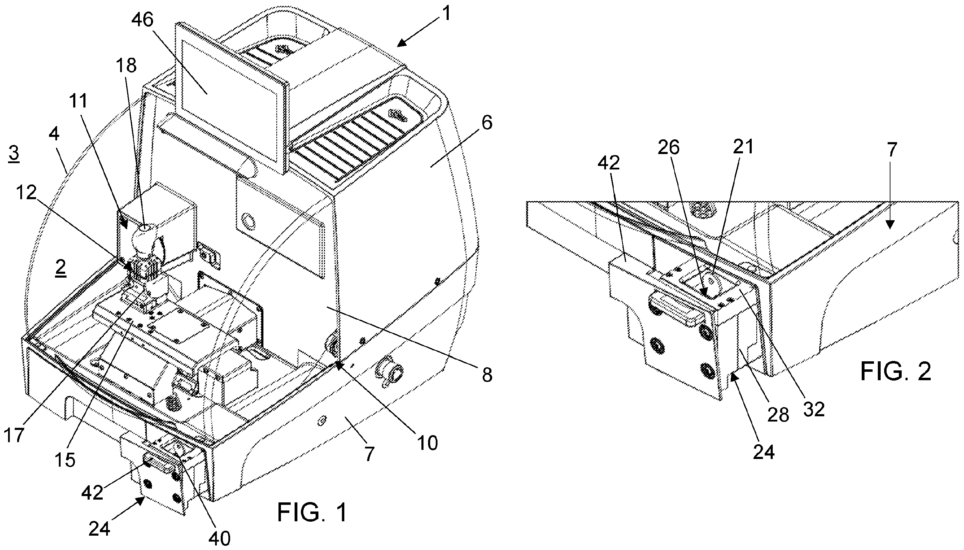

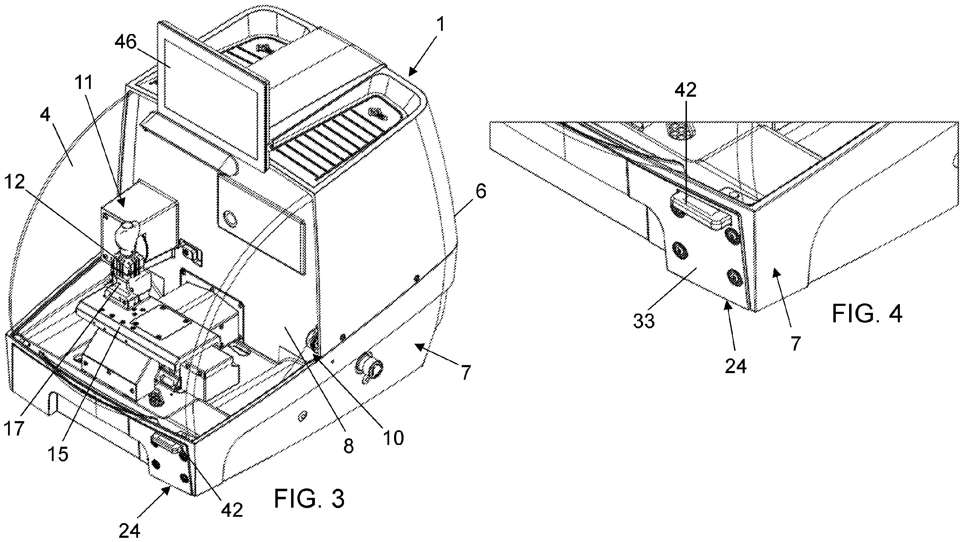

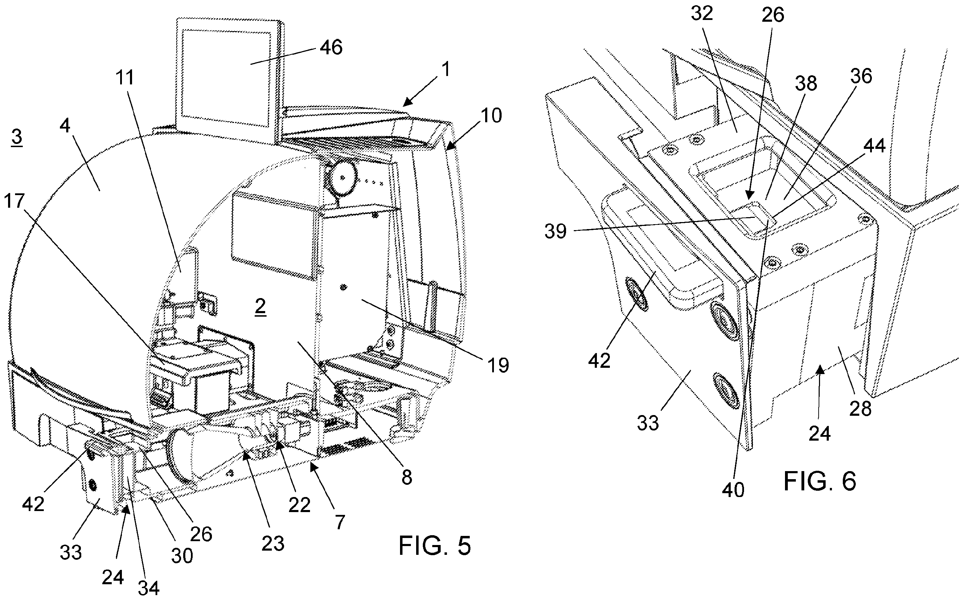

Conveniently, the drawer 24 is movable between a first opening condition in which the drawer 24 protrudes with respect to the base 7 (see figures 1, 2, 5, 6 and 7) and a second closing condition in which the drawer 24 is housed entirely, or for a large part, inside the base 7 (see fig. 3, 4 and 8). This is particularly advantageous in that, in the closed condition, the drawer 24 is completely protected from the external environment, avoiding in particular the entry inside it of machining chips, sparks or other in the direction of the optical reader 22 housed inside. of the base 7 of the machine 1.

Conveniently, the drawer 24 is configured in such a way as to define inside it a space substantially closed and separated from the outside, and open only towards the optical reader 22. Advantageously, for this purpose, said drawer 24 has a substantially box-like structure and, in particular, comprises side walls 28, a lower base 30 and an upper base 32, a rear wall 33 (facing outwards), while it has no front wall so that its internal space is open/facing towards the optical reader 22.

Advantageously, means are provided - for example limit switches - to block the drawer 24 in said first opening condition, so that this first condition is also univocally and clearly identified by the operator.

Advantageously, the movement of the drawer 24 between said two conditions is carried out manually and/or motorization means configured to cause the movement of said drawer 24 can be provided. Advantageously, the drawer 24 can be equipped with elastic release means (not shown) to allow a "push-pull" type of opening movement of the drawer, thus allowing the user to open the drawer 24 by simply pressing a corresponding button/lever associated with the drawer itself.

Conveniently, clamping means 26 of the key 21 are provided on the drawer, preferably to clamp it when it is substantially vertically oriented (ie when the longitudinal development direction of the stem is substantially vertically aligned).

Conveniently, said clamping means 26 are configured and/or mounted on the drawer 24 to hold the key 21 so that its coded portion enters the area framed by said optical reader 22. In particular, the clamping means 26 are configured to hold the key 21 in correspondence with its head, and/or its stem (for example in the case of bit keys), and/or the connecting section between its head and its stem, and so that a of the two opposite and parallel faces of the coded portion of the key stem is substantially perpendicular to the optical axis of the optical reader 22. Conveniently, it is understood that, in particular in the case of flat or bit keys, the coded portion is defined by the profile of the edge of said faces.

Conveniently, an internal wall 34 is provided on the drawer which, preferably, is flat and is made of transparent material (for example glass). In particular, the internal wall 34 has a substantially vertical development. Conveniently, at least the coded portion of one face of the shaft of the key 21, of which the coding profile is to be detected, is intended to come into contact/support with a corresponding face of said inner wall 34.

Conveniently, said inner wall 34 is installed/provided on said drawer 24 and, therefore, moves with the latter. Conveniently, said internal wall 34 substantially defines a vertical support plate for the key 21 whose coding profile is to be detected.

In correspondence with the internal wall 34, lighting means 35 are provided, for example a series of LEDs. Conveniently, the lighting means 35 are positioned behind the supporting wall 34 and, in particular, are interposed between said internal wall and the rear wall 33 of the drawer 24. Preferably, the lighting means 35 are configured to illuminate the entire area framed by the optical surface of the reader 22in a uniform manner. Furthermore, suitably, the lighting means 35 are positioned at a distance from the key 21, when it is held by the clamping means 26, such that the light rays emitted by said means 35 arrive, parallel to each other, on the face of the key and interfere with its shape preferably without deviations or reflections, that is, so as to receive an image with clearly defined contours on the sensor 31. Preferably, the lighting means 35 comprise a polygonal or curved illuminator 35, the perimeter of which is covered at a regular distance by LEDs.

Conveniently, the drawer 24 can be provided with means (not shown) for detecting/monitoring the opening and/or closing condition of the drawer itself, and in particular for verifying its closure. Preferably, said means comprise a microswitch, which is closed (or open) only when the drawer 24 is in the second closing condition, and open (or closed) when the drawer is in the first opening condition or in an intermediate condition.

Preferably, the device 20 also comprises a control unit for the activation/deactivation of the lighting means 35 and/or optical sensor 31. In particular, this control unit of the device 20 is configured to command/control the power supply of the lighting means 35 and/or the optical sensor 31. Conveniently, said control unit of the device 20 comprises a processor which, preferably but not necessarily, corresponds to that of the image processing unit.

Advantageously, said processor of the control unit of the device 20 can correspond to the processor defining the control and management unit 19 of the entire machine.

Preferably, said means for detecting/monitoring the opening and/or closing condition of the drawer 24 are electrically connected to the control unit 20 to send to the latter corresponding signals representative of the condition in which the drawer 24 is found. Conveniently, the control unit of the device 20 is configured so that, on the basis of the signals received by said means for detecting/monitoring the opening and/or closing condition of the drawer 24, it commands correspondingly the activation/deactivation of the lighting means 35 and/or of the optical sensor 31.

In particular, suitably, the control unit 20 is configured so that, when the drawer 24 is in the second closed condition, it controls the lighting means 35 so as to keep them off (i.e. not are activated and/or powered), thus limiting energy consumption and also preserving the stability over time of said lighting means (in particular of the LEDs).

Advantageously, only when the drawer 24 is in the open condition, and preferably when it is completely extracted, the control unit 20 commands the activation of the lighting means 35.

In particular, suitably, when the drawer 24 is in the second closed condition, the control unit 20 commands the deactivation of the optical sensor 31 (for example it is not powered).

Advantageously, only when the drawer 24 is in the open condition, and preferably when it is completely extracted, the control unit 20 commands the activation of the optical sensor 31.

Conveniently, the control unit of the device 20 is connected and/or or incorporated in the control and management unit 19 of the entire machine 1 so that, on the basis of the signals received by said means for detecting/monitoring the opening and/or closing condition of the drawer 24, it commands correspondingly the activation/deactivation of the cutter 11 and/or the movement of the cover covering the operating area of the machine 1. In particular, for example, when the drawer 24 is in the open condition and the cover covering the operating area is open, the control of the device 20 and/or the control and management unit 19 of the entire machine 1 prevents the cutter 11 from starting, thus avoiding the risk of chips entering the box 24.

Advantageously, the clamping means 26 comprise a through slot/opening 40 for the introduction of the shaft of the key 21 to be read inside the drawer 24 and, in correspondence with said slot/opening 40, a section/movable edge 44 which moves towards/away from a fixed section/edge 39; said portions/edges 44, 39 hold the key by acting on the respective faces/areas, opposite to each other, of said key, in correspondence with its head and/or its stem and/or the connecting portion between head and stem.

Conveniently, the drawer 24 comprises, at its upper base 32 (and preferably on the bottom of a depressed area 36 defined in said upper base), a mobile element 38 which is provided with a through slot/opening 40; moreover, said element 38 is associated with/provided with a lever (or control member) 42 that can be operated from the outside, so as to modify the position of said through slot/opening 40 with respect to the remaining structure of the drawer 24, and in particular with respect to a fixed abutment edge 39 to thus vary the passage section for the introduction of the key 21 to be read and in particular of the coded portion of its stem inside the drawer 24. Furthermore, the lever 42 conveniently modifies the position of the slot 40 in contrast to the action of elastic means (not shown), for example defined by at least one spring.

Conveniently, said through slot/opening 40 is provided at the upper base 32 of the drawer 24 so that, when the drawer is open, it is easily accessible from the outside. Preferably, said through slot/opening 40 is provided at the depressed portion 26 of said upper base 32 of drawer 24.

Advantageously, when drawer 24 is in the first open condition, or in an intermediate condition, the through slot 40 is closed, since the mobile element 38 is kept closed against the fixed edge 39 by the elastic means, thus isolating and protecting from the external environment the internal area of the drawer 24 in which the reading takes place and in which the area framed by the optical reader is defined 22. Conveniently, only by pressing against the lever 42 (i.e. pushing it towards the rear wall 33 of the drawer 24), the mobile element 38 moves away from the fixed edge 39, thus opening the through slot 40 for the insertion of the key 21, a slot that therefore - when the lever 42 is released - will have the longitudinal dimensions substantially corresponding to those of the key 21, thus minimizing the spaces for any passage of dust or shavings.

Conveniently, moreover, flush with the internal wall 34 and substantially coplanar with the edge 44 of the through slot/opening 40 of the mobile element 38, there is the fixed abutment edge 39.

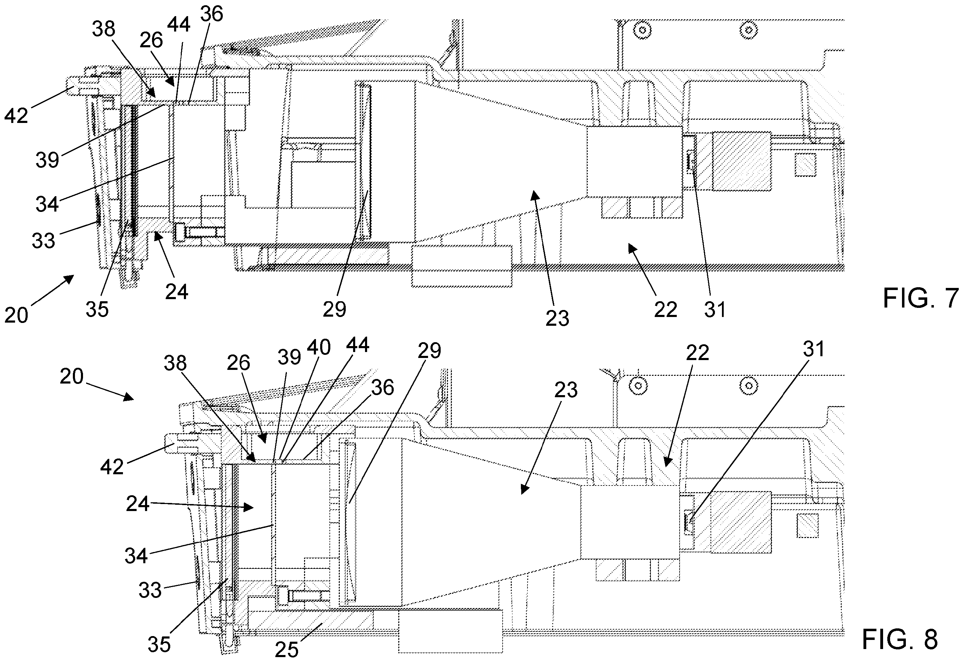

In particular, the clamping means 26 are configured in such a way that, by acting on the lever 42 and in contrast with the action of said elastic means, the edge 44 of said through slot/opening 40 facing the optical reader 22 moves away from the internal supporting wall 34 and/or from the fixed abutment edge 39, thus defining a suitable passage for the insertion of the key stem 21. Conveniently, then, when the operator releases the lever 42, the elastic element pushes/brings back the edge 44 of said slot/opening 40 towards the internal support wall 34 and/or towards the fixed abutment edge 39; in this way, therefore, as shown in fig. 7, the key 21 is clamped between the fixed abutment edge 39 and/or the internal wall 34 (on which, preferably, the rod rests), and the edge 44 of said slot/opening 40 of the mobile element 38, edge 44 which acts in correspondence with the head of the key 21 and/or its stem, or in the connection area between the head and the beginning of the stem.

Advantageously, the same lever 42 acts as a gripping member (handle) for the operator both to make the drawer 24 pass from the closed to the open condition, and as a control member for activating the clamping means 26 of the key 21.

In essence, advantageously, the clamping means 26 of the key 21, once activated, are configured in such a way as to hold the key between:
- said inner wall 34 (which in particular comes into contact with the shaft of said key 21) and/or said fixed abutment edge 49, which act on a first face of the key 21, and
- the edge 44 of the through slot/opening 40 of said movable element 38; in particular, this edge 44 acts on the other face of the key 21.

Advantageously, the device 20 is configured so that, when the drawer 24 is in said first opening condition, the shaft of the key 21, which is retained by the clamping means 26 mounted on the drawer itself, is at the correct and optimal distance with respect to the objective of the optical reader 22. Conveniently, said optimal distance between the key 21 and the objective of the optical reader 22 substantially corresponds to the real focal distance of the telecentric optics of said optical reader. Conveniently, the telecentric optical reader 22 can be mounted on adjustable supports (not shown) for example up to +/- 5mm from the central position. Said supports are then adjusted so that the telecentric optical reader 22 moves forward or backward until, with the drawer 24 open, the key 21 is in correspondence of the exact focus distance from the objective of the optical reader 22; suitably, once this condition has been reached, the reader 22 is suitably fixed and locked. Conveniently, the optimal position can be found empirically, or using the constructive parameters of the objective itself.

In particular, before its assembly, each telecentric lens of the optical reader 22, once it has been calibrated, is characterized by having a certain nominal distance and a certain real distance, which could vary by +/- 5% with respect to the nominal. Therefore, if, for example, a telecentric optical reader 22 with a nominal focal distance of 80 mm and a real focal distance of 81 mm is to be mounted inside the base 7, the supports of said optical reader must be suitably adjusted so as to move the optical reader itself of 1mm with respect to the key 21 which is held by the clamping means 26, when the drawer 24 is open.

Preferably, the drawer 24 is also configured so that, when the key is held by the clamping means 26 mounted on the drawer itself, one face of the stem substantially rests on the internal wall 34 provided in said drawer 24.

Conveniently, the clamping means 26 are configured in such a way as to ensure that the shaft of the key 21 to be read (held between the fixed abutment edge 39 and the edge 44 of the through slot/opening 40 defined in the mobile element 38) is correctly positioned for its reading, i.e. has the longitudinal axis of the stem facing and orthogonal to the optical reader 22.

Advantageously, when the drawer is in said first opening condition (ie extracted), the area - which in particular is defined by the through slot/opening 40 - for the introduction of the key 21 into the clamping means 26 is accessible from the outside 3; while, when the drawer is in said second condition, said zone for introducing the key 21 into the clamping means 26 is not accessible from the outside 3.

The operation of the device 20, according to the invention, for detecting the profile of coding of a key 21, is clear from what has just been described.

Conveniently, when reading of the coding profile of a key 21 is not required, the drawer 24 is in said second closing condition and, in particular, is inserted and housed for the most part, or entirely, inside the base 7 of the machine 1. Advantageously, in this condition, only the lever 42 protrudes from the base 7 of the machine 1 which acts as a gripping member to allow the drawer to be extracted.

Conveniently, if necessary, by acting on the lever 42 associated with the drawer 24, the operator removes the latter from the base 7 of the machine 1 to make it pass from the second closing condition to the first opening condition.

Once the drawer 24 has been extracted and is in the open condition, the operator acts on the lever 42, in contrast with the elastic means, so as to open the mechanism of the clamping means 26 and thus define a passage for the insertion of the key stem 21 inside said drawer 24. Conveniently, then, once the key stem 21 has been inserted, the lever 42 is released, so as to close said mechanism of the clamping means 26 so that the key 21 is withheld between:
- said internal wall 34 (which in particular comes into contact with the stem of said key 21) and/or said fixed abutment edge 39, which act on a first face of the key, and
- the edge 44 of the slot/through opening 40 of said movable element 38 (which, in correspondence with the other face of the key 21, comes into contact with the head of said key or with the connecting portion between the head and the key stem itself).

Once the key has been gripped, the optical reader 22 collects on said at least one sensor 31 at least an image of the profile of the coded portion of the key 21 which is held by the clamping means 26 mounted on the drawer 24; suitably, said at least one image is transferred - in the form of a digital signal - to the processing unit of the device 20 and/or of the machine 1 for subsequent processing.

Advantageously, the data relating to the coding profile of the key 21 are then calculated from the original and/or processed image.

Advantageously, the original and/or processed image and/or the data relating to the coding profile are then appropriately saved in the storage unit, associating them with an identification code of the key 21, so that they can then be made available and used (preferably at a later time) for the control of a cutting unit 11, preferably of the same machine 1. Conveniently, the image and/or the data are saved in an organized way in a database, to facilitate their research and consultation.

Advantageously, after the coding profile has been detected, the relative original and/or processed image, and/or the data relating to the coding can be displayed on a suitable display 46 which can be provided by the same machine 1.

Advantageously, the device 20 according to the invention can be used to detect the profile of a newly encrypted key 21 and, in particular, for this purpose, the processing unit is configured to compare the images and/or data obtainable from the images of the duplicated key and of the original key, and this in order to verify if the duplicated key corresponds, within the limits of the predefined standards, to the original key.

From what has been said it is clear that the device 20, according to the invention, for detecting the coding profile of a key is particularly advantageous in that:
- makes the duplicating machine, in which this device is incorporated/installed, more convenient and efficient; in particular, the fact that the detection device of the key coding profile is installed in the key cutting machine outside the operating area, where the clamps and the milling unit of the machine are positioned, allows the reading of the profile of a key even while, in said operating area, a key duplication process is being carried out,
- protects the delicate telecentric optics,
- has a particularly small footprint,
- is quick and easy to use,
- allows a particularly accurate and precise detection of the key coding profile,
- it can be easily applied/installed even in duplicating machines already available on the market.

## Claims

1. Device (20) for detecting the coding profile of a key (21), of the type intended to be installed and/or provided inside a key cutting machine (1) comprising an operating area (2) provided of at least one milling and/or cutting unit (11) and of at least one clamp (12) for locking a key, and comprising:
- an optical reader (22) which is configured to be entirely housed inside the structure of said duplicating machine (1) but outside the operating area (2) of said machine (1),
- a drawer (24) provided with clamping means (26) to hold said key (21), whose coding profile is to be detected, in correspondence with its head and/or its stem and/or a connecting section between the head and the shaft of said key, said drawer (24) being configured to be movable towards and away from said optical reader (22),
said device being **characterized in that**:
- said optical reader (22) comprises a telecentric optic (23) interposed between said drawer (24) and at least one optical sensor (31) configured to collect at least one image of the coding profile of said key (21) held by said clamping means (26),
- said telecentric optic (23), said at least one sensor and the framed area, which is defined inside said drawer (24), are aligned along the same optical axis which is substantially perpendicular to one face of said key (21) of which the coding profile is to be detected.

2. Device according to claim 1, **characterized in that** the area framed by said optical reader (22) is defined inside said drawer (24), said clamping means (26) being configured and/or mounted on said drawer (24) to hold said key (21) so that its coded portion enters the area framed by said optical reader (22)

3. Device according to one or more of the preceding claims, **characterized in that** said optical reader (22) comprises a video camera in which said sensor (31) is incorporated.

4. Device according to one or more of the preceding claims, **characterized in that** said drawer (24) is movable along a direction corresponding and/or parallel to the optical axis of said optical reader (22).

5. Device according to one or more of the preceding claims, **characterized in that** it comprises means for locking the drawer (24) in a first opening condition.

6. Device according to one or more of the preceding claims, **characterized in that** when said drawer (24) is in a first condition, the area for introducing the key (21) into the clamping means (26) is accessible from the outside (3), while when said drawer (24) is in a second condition, the area for introducing the key (21) into the clamping means (26) is not accessible from the outside (3).

7. Device according to one or more of the preceding claims **characterized in that** the clamping means (26) are provided with a control member (42), which also acts as a gripping member to make said drawer (24) pass from said second condition to said first condition.

8. Device according to one or more of the preceding claims **characterized in that** said drawer (24) comprises an internal wall (34) which is made of transparent material, said internal wall (34) facing said optical reader (22) and being mounted in said drawer (24) so that, when said key whose coding profile is to be detected is held by said clamping means (26), the coded portion of said key is interposed between said internal wall (34) and said optical reader (22).

9. Device according to one or more of the preceding claims **characterized in that** it comprises lighting means (35) configured to illuminate in a uniform manner the entire surface of the area framed by the optical reader (22).

10. Device according to one or more of the preceding claims **characterized in that** said clamping means (26) comprise a through slot (40) for the introduction of the key stem (21) to be read inside the drawer (24) and, in correspondence with said slot (40), there is an edge (44) which is movable in contrast to elastic means and can be operated from the outside by acting on a control member (42), said edge (44) being movable towards and away from a fixed edge (39) which is integral with said drawer (24), said edges (44, 39) being configured to hold the key (21) by acting on the respective faces, opposite to each other, of said key, in correspondence with its head and/or its stem and/or the connecting section between head and stem.

11. Device according to the preceding claim **characterized in that** said processing unit comprises a processor configured to process, preferably according to known digital image processing algorithms, said at least one image that has been received.

12. Device according to one or more of the preceding claims, **characterized in that** said telecentric optic (23) comprises an input lens (29) having a diameter equal to or greater than the field of view, in particular it has a diameter greater than at least the coded portion of the key (21) whose coding is to be detected.

13. Electronic key-cutting machine, preferably of the professional or semi-professional type, comprising:
- a support structure (10),
- a front operative area (2) that is accessible by the operator and in which at least one cutter (11) and/or another cutting element are housed, and at least one clamp (12) for locking a key,
and **characterized by** comprising a device (20) for detecting the coding profile of a key (21), according to one or more of the preceding claims, which is positioned outside the operating area (2) of said duplicating machine (1) and inside the support structure (10) of said machine.

14. Machine according to the preceding claim, **characterized in that** said support structure (10) comprises a base and by the fact that said device to detect the coding key of a profile (24) is positioned in correspondence of the base (7) of said machine

15. Machine according to the preceding claim, **characterized in that**:
- said optical reader (22) is entirely housed inside said base (7),
- when in said first condition, the drawer (24) of said device (20) protrudes with respect to the base (7),
- when it is in said second condition, the drawer (24) is housed entirely, or for a large part, inside the base (7).

## Patentansprüche

1. Vorrichtung (20) zur Erkennung des Codierungsprofils eines Schlüssels (21), vom Typ, der dazu bestimmt ist, in einer Schlüsselschneidmaschine (1) installiert und/oder bereitgestellt zu werden, umfassend einen Betriebsbereich (2), der von mindestens einer Fräs- und/oder Schneideinheit (11) und mindestens einer Klemme (12) zum Verriegeln eines Schlüssels bereitgestellt wird, und umfassend:
- ein optisches Lesegerät (22), das so konfiguriert ist, dass es vollständig innerhalb der Struktur der Vervielfältigungsmaschine (1), aber außerhalb des Betriebsbereichs (2) der Maschine (1) untergebracht ist,
- eine Schublade (24), die mit Klemmmitteln (26) versehen ist, um den Schlüssel (21), dessen Codierungsprofil erkennt werden soll, an seinem Kopf und/oder seinem Schaft und/oder einer Verbindungssektion zwischen dem Kopf und den Schaft des Schlüssels zu halten, wobei die Schublade (24) so konfiguriert ist, dass sie auf das optische Lesegerät (22) hinführend und von ihm wegführend bewegt werden kann,
wobei die Vorrichtung **dadurch gekennzeichnet ist, dass**:
- das optische Lesegerät (22) eine telezentrische Optik (23) umfasst, die zwischen der Schublade (24) und mindestens einem optischen Sensor (31) angeordnet ist, der konfiguriert ist, um mindestens ein Bild des Codierungsprofils des Schlüssels (21) zu erkennen, der von den Klemmmitteln (26) gehalten wird,
- die telezentrische Optik (23), der mindestens eine Sensor und der umrahmte Bereich, der innerhalb der Schublade (24) definiert ist, entlang der gleichen optischen Achse ausgerichtet sind, die im Wesentlichen senkrecht zu einer Fläche des Schlüssels (21) ist, dessen Codierungsprofil erkennt werden soll.

2. Vorrichtung nach Anspruch 1, **dadurch gekennzeichnet, dass** der vom optischen Lesegerät (22) umrahmte Bereich innerhalb der Schublade (24) definiert ist, wobei die Klemmmittel (26) so konfiguriert und/oder an der Schublade (24) montiert sind, dass sie den Schlüssel (21) so halten, dass sein codierter Abschnitt in den vom optischen Lesegerät (22) umrahmten Bereich eintritt.

3. Vorrichtung nach einem oder mehreren der vorhergehenden Ansprüche, **dadurch gekennzeichnet, dass** das optische Lesegerät (22) eine Videokamera umfasst, in die der Sensor (31) integriert ist.

4. Vorrichtung nach einem oder mehreren der vorhergehenden Ansprüche, **dadurch gekennzeichnet, dass** die Schublade (24) entlang einer Richtung entsprechend und/oder parallel zur optischen Achse des optischen Lesegeräts (22) bewegbar ist.

5. Vorrichtung nach einem oder mehreren der vorhergehenden Ansprüche, **dadurch gekennzeichnet, dass** sie Mittel zum Verriegeln der Schublade (24) in einem ersten Öffnungszustand umfasst.

6. Vorrichtung nach einem oder mehreren der vorhergehenden Ansprüche, **dadurch gekennzeichnet, dass**, wenn sich die Schublade (24) in einem ersten Zustand befindet, der Bereich zum Einführen des Schlüssels (21) in die Klemmmittel (26) von außen (3) zugänglich ist, während, wenn sich die Schublade (24) in einem zweiten Zustand befindet, der Bereich zum Einführen des Schlüssels (21) in die Klemmmittel (26) von außen (3) nicht zugänglich ist.

7. Vorrichtung nach einem oder mehreren der vorhergehenden Ansprüche, **dadurch gekennzeichnet, dass** die Klemmmittel (26) mit einem Steuerelement (42) versehen sind, das auch als Greifelement wirkt, um die Schublade (24) aus dem zweiten Zustand in den ersten Zustand übergehen zu lassen.

8. Vorrichtung nach einem oder mehreren der vorhergehenden Ansprüche, **dadurch gekennzeichnet, dass** die Schublade (24) eine Innenwand (34) umfasst, die aus transparentem Material hergestellt ist, wobei die Innenwand (34) dem optischen Lesegerät (22) zugewandt ist und in der Schublade (24) montiert ist, so dass, wenn der Schlüssel, dessen Codierungsprofil erkennt werden soll, von den Klemmmitteln (26) gehalten wird, der codierte Abschnitt des Schlüssels zwischen der Innenwand (34) und dem optischen Lesegerät (22) angeordnet ist.

9. Vorrichtung nach einem oder mehreren der vorhergehenden Ansprüche, **dadurch gekennzeichnet, dass** sie Beleuchtungsmittel (35) umfasst, die dazu konfiguriert sind, die gesamte Oberfläche des vom optischen Lesegerät (22) umrahmten Bereichs gleichmäßig auszuleuchten.

10. Vorrichtung nach einem oder mehreren der vorhergehenden Ansprüche, **dadurch gekennzeichnet, dass** die Klemmmittel (26) einen durchgehenden Schlitz (40) zum Einführen des zu lesenden Schlüsselschafts (21) in die Schublade (24) umfassen und am Schlitz (40) eine Kante (44) vorhanden ist, die im Gegensatz zu elastischen Mitteln bewegbar ist und von außen durch Einwirken auf ein Steuerelement (42) betätigt werden kann, wobei die Kante (44) zu einer festen Kante (39) hinführend und von dieser wegführend bewegbar ist, die einstückig mit der Schublade (24) ist, wobei die Kanten (44, 39) konfiguriert sind, um den Schlüssel (21) durch Einwirken auf die jeweiligen einander gegenüberliegenden Flächen des Schlüssels an seinem Kopf und/oder seinem Schaft und/oder der Verbindungssektion zwischen Kopf und Schaft zu halten.

11. Vorrichtung nach dem vorhergehenden Anspruch, **dadurch gekennzeichnet, dass** die Verarbeitungseinheit einen Prozessor umfasst, der konfiguriert ist, um, vorzugsweise gemäß bekannten digitalen Bildverarbeitungsalgorithmen, das mindestens eine empfangene Bild zu verarbeiten.

12. Vorrichtung nach einem oder mehreren der vorhergehenden Ansprüche, **dadurch gekennzeichnet, dass** die telezentrische Optik (23) eine Eingangslinse (29) mit einem Durchmesser gleich oder größer als das Sichtfeld umfasst, insbesondere weist sie einen Durchmesser größer als zumindest der codierte Abschnitt des Schlüssels (21) auf, dessen Codierung erkennt werden soll.

13. Elektronische Schlüsselschneidmaschine, vorzugsweise professioneller oder semiprofessioneller Art, umfassend:
- eine Tragstruktur (10),
- einen vorderen Betriebsbereich (2), der für den Bediener zugänglich ist und in dem mindestens eine Schneide (11) und/oder ein anderes Schneidelement untergebracht sind, und mindestens eine Klemme (12) zum Verriegeln eines Schlüssels,
und **gekennzeichnet durch** das Umfassen einer Vorrichtung (20) zur Erkennung des Codierungsprofils eines Schlüssels (21) nach einem oder mehreren der vorhergehenden Ansprüche, die außerhalb des Betriebsbereichs (2) der Vervielfältigungsmaschine (1) und innerhalb der Tragstruktur (10) der Maschine positioniert ist.

14. Maschine nach dem vorhergehenden Anspruch, **dadurch gekennzeichnet, dass** die Tragstruktur (10) eine Basis umfasst und dadurch, dass die Vorrichtung zur Erkennung des Codierungsschlüssels eines Profils (24) an der Basis (7) der Maschine positioniert ist.

15. Maschine nach dem vorhergehenden Anspruch, **dadurch gekennzeichnet, dass**:
- das optische Lesegerät (22) vollständig in der Basis (7) untergebracht ist,
- wenn im ersten Zustand, die Schublade (24) der Vorrichtung (20) in Bezug auf die Basis (7) vorsteht,
- wenn sie sich im zweiten Zustand befindet, die Schublade (24) vollständig oder zu einem großen Teil innerhalb der Basis (7) untergebracht ist.

## Revendications

1. Dispositif (20) pour la détection du profil de codage d'une clé (21), du type destiné à être installé et/ou ménagé à l'intérieur d'une machine à tailler les clés (1) comprenant une zone opérationnelle (2) munie d'au moins une unité de fraisage et/ou de taillage (11) et d'au moins une pince (12) pour le verrouillage d'une clé, et comprenant :
- un lecteur optique (22) qui est configuré pour être entièrement logé à l'intérieur de la structure de ladite machine de duplication (1) mais à l'extérieur de la zone opérationnelle (2) de ladite machine (1),
- un tiroir (24) muni de moyens de pincement (26) pour tenir ladite clé (21), dont le profil de codage doit être détecté, en correspondance avec sa tête et/ou sa tige et/ou une section de liaison entre la tête et l'arbre de ladite clé, ledit tiroir (24) étant configuré pour être mobile vers et en éloignement par rapport audit lecteur optique (22),
ledit dispositif étant **caractérisé en ce que** :
- ledit lecteur optique (22) comprend une optique télécentrique (23) interposée entre ledit tiroir (24) et au moins un capteur optique (31) configuré pour collecter au moins une image du profil de codage de ladite clé (21) tenue par lesdits moyens de pincement (26),
- ladite optique télécentrique (23), ledit au moins un capteur et la zone encadrée, qui est définie à l'intérieur dudit tiroir (24), sont alignés le long du même axe optique qui est sensiblement perpendiculaire à une face de ladite clé (21) dont le profil de codage doit être détecté.

2. Dispositif selon la revendication 1, **caractérisé en ce que** la zone encadrée par ledit lecteur optique (22) est définie à l'intérieur dudit tiroir (24), lesdits moyens de serrage (26) étant configurés et/ou montés sur ledit tiroir (24) pour tenir ladite clé (21) de sorte que sa partie codée entre dans la zone encadrée par ledit lecteur optique (22).

3. Dispositif selon l'une ou plusieurs des revendications précédentes, **caractérisé en ce que** ledit lecteur optique (22) comprend une caméra vidéo dans laquelle ledit capteur (31) est incorporé.

4. Dispositif selon l'une ou plusieurs des revendications précédentes, **caractérisé en ce que** ledit tiroir (24) est mobile le long d'une direction correspondant et/ou parallèle à l'axe optique dudit lecteur optique (22).

5. Dispositif selon l'une ou plusieurs des revendications précédentes, **caractérisé en ce qu'**il comprend des moyens pour le verrouillage du tiroir (24) dans un premier état d'ouverture.

6. Dispositif selon l'une ou plusieurs des revendications précédentes, **caractérisé en ce que** lorsque ledit tiroir (24) est dans un premier état, la zone pour l'introduction de la clé (21) dans les moyens de pincement (26) est accessible par l'extérieur (3), tandis que lorsque ledit tiroir (24) est dans un second état, la zone pour l'introduction de la clé (21) dans les moyens de pincement (26) n'est pas accessible par l'extérieur (3).

7. Dispositif selon l'une ou plusieurs des revendications précédentes **caractérisé en ce que** les moyens de pincement (26) sont munis d'un organe de commande (42), qui sert également d'un organe de préhension pour amener ledit tiroir (24) à passer dudit second état audit premier état.

8. Dispositif selon l'une ou plusieurs des revendications précédentes **caractérisé en ce que** ledit tiroir (24) comprend une paroi interne (34) qui est constituée de matériau transparent, ladite paroi interne (34) faisant face audit lecteur optique (22) et étant montée dans ledit tiroir (24) de sorte que, lorsque ladite clé dont le profil de codage doit être détecté est tenue par lesdits moyens de pincement (26), la partie codée de ladite clé soit interposée entre ladite paroi interne (34) et ledit lecteur optique (22).

9. Dispositif selon l'une ou plusieurs des revendications précédentes **caractérisé en ce qu'**il comprend des moyens d'éclairage (35) configurés pour éclairer, d'une manière uniforme, la totalité de la surface de la zone encadrée par le lecteur optique (22).

10. Dispositif selon l'une ou plusieurs des revendications précédentes **caractérisé en ce que** lesdits moyens de pincement (26) comprennent une fente traversante (40) pour l'introduction de la tige de clé (21) devant être lue à l'intérieur du tiroir (24) et, en correspondance avec ladite fente (40), se trouve un bord (44) qui est mobile en opposition à des moyens élastiques et peut être actionné par l'extérieur en agissant sur un organe de commande (42), ledit bord (44) étant mobile vers et en éloignement par rapport à un bord fixe (39) solidaire dudit tiroir (24), lesdits bords (44, 39) étant configurés pour tenir la clé (21) en agissant sur les faces respectives, opposées l'une à l'autre, de ladite clé, en correspondance avec sa tête et/ou sa tige et/ou la section de liaison entre la tête et la tige.

11. Dispositif selon la revendication précédente **caractérisé en ce que** ladite unité de traitement comprend un processeur configuré pour traiter, de préférence selon des algorithmes de traitement d'image numérique connus, ladite au moins une image qui a été reçue.

12. Dispositif selon l'une ou plusieurs des revendications précédentes, **caractérisé en ce que** ladite optique télécentrique (23) comprend un objectif d'entrée (29) ayant un diamètre égal ou supérieur au champ de vision, en particulier il possède un diamètre plus grand qu'au moins la partie codée de la clé (21) dont le codage doit être détecté.

13. Machine électronique à tailler les clés, de préférence du type professionnel ou semi-professionnel, comprenant :
- une structure de support (10),
- une zone opérationnelle avant (2) qui est accessible par l'opérateur et dans laquelle au moins une lame (11) et/ou un autre élément de taillage sont logés, et au moins une pince (12) pour le verrouillage d'une clé,
et **caractérisée par le fait qu'**elle comprend un dispositif (20) pour la détection du profil de codage d'une clé (21), selon l'une ou plusieurs des revendications précédentes, qui est positionné à l'extérieur de la zone opérationnelle (2) de ladite machine de duplication (1) et à l'intérieur de la structure de support (10) de ladite machine.

14. Machine selon la revendication précédente, **caractérisée en ce que** ladite structure de support (10) comprend une base et par le fait que ledit dispositif pour détecter la clé de codage d'un profil (24) est positionné en correspondance de la base (7) de ladite machine.

15. Machine selon la revendication précédente, **caractérisée en ce que** :
- ledit lecteur optique (22) est entièrement logé à l'intérieur de ladite base (7),
- lorsqu'il est dans ledit premier état, le tiroir (24) dudit dispositif (20) fait saillie par rapport à la base (7),
- lorsqu'il est dans ledit second état, le tiroir (24) est logé entièrement, ou pour une majeure partie, à l'intérieur de la base (7).
